# EUROPEAN PATENT APPLICATION

(11) **EP 3 909 920 A1**
(43) Date of publication of application: **17.11.2021**
(21) Application number: 20737994.2
(22) Date of filing: 06.01.2020
(51) Int. Cl.: C02F 1/66, C02F 1/76, C02F 1/78, B01D 53/50, B01D 53/78, C02F 103/08

(54) **SEAGOING VESSEL CLEAN SAILING METHOD AND VESSEL**

(30) Priority: 10.01.2019 CN 201910023421; 14.01.2019 CN 201910030414; 16.01.2019 CN 201910039789; 27.02.2019 WO PCT/CN2019/076278; 08.03.2019 WO PCT/CN2019/077445; 08.05.2019 WO PCT/CN2019/085980; 30.09.2019 WO PCT/CN2019/109302
(71) Applicant: Peng, Sigan, Wuhan, Hubei 430072 (CN)
(72) Inventor: Peng, Sigan, Wuhan, Hubei 430072 (CN)
(74) Representative: Winter, Brandl - Partnerschaft mbB
(86) International application number: PCT/CN2020/070485
(87) International publication number: WO 2020/143578

(57) **Abstract**

The present invention relates to a process for clean sailing of marine ship, comprising steps of: a) scrubbing exhaust gas of engine with seawater to generate scrubbing seawater; b) disposing of the scrubbing seawater in an open loop operation mode, including neutralizing the scrubbing seawater in an open loop operation mode; and/or c) disposing of the scrubbing seawater in a closed loop operation mode, including: i) storing the scrubbing seawater in a storage container; and ii) neutralizing the scrubbing seawater in a closed loop operation mode. The present invention also relates to a ship. The purpose of the present invention is to maintain the unique advantages of economy and environmental protection of marine ships to fulfill the global regulations of the United Nations on ship sulfur limit while safe sailing is ensured.

## Description

### FIELD OF THE INVENTION

The present invention relates to a process for clean sailing of marine ship and a ship. The purpose of the present invention is to maintain the unique advantages of economy and environmental protection of marine ships to fulfill the new global regulations of the United Nations on ship sulfur limit while safe sailing is ensured. The present invention belongs to the technical field of ship anti-pollution and ocean engineering.

### DESCRIPTION OF RELATED ART

According to the INTERNATIONAL CONVENTION FOR THE PREVENTION OF POLLUTION FROM SHIPS (MARPOL Annex VI) and relevant regulations signed by the Contracting States, the INTERNATIONAL MARITIME ORGANIZATION (IMO) will implement the global ship sulfur limit from January 1, 2020. Specifically, it is not allowed on the ships, which does not install exhaust gas cleaning system (EGC) to meet the exhaust standard, to carry ship fuel with sulfur content more than 0.5% since March 1, 2020. Regarding the means for fulfilling the global ship sulfur limit, because the means of using low sulfur fuel has defects that the price of the low sulfur fuel is high at present and the shipping costs may be higher in the future (significant increase of carbon emissions from low sulfur oil refining process will be restricted by the PARIS AGREEMENT), the expectation of adopting EGC means in the whole voyage are getting higher and higher in shipping industry. However, the problems of adopting EGC means on ships mainly includes the follows. 1. Some ships have installed open loop EGC and use the standard technical scheme of IMO EGC GUIDLINE (including USA VGP) for cleaning and desulfurizing the exhaust gas. It is a mature scheme, in which only natural seawater is used without any artificial chemical additives, and the scrubbing water, which has met the allowed standards and complied with the specifications, is discharged into the ocean. This scheme is once the most possible one to maintain and develop the unique advantages of economy and environmental protection of marine shipping industry. However, because of the limitation that any discharging of scrubbing water is prohibited or will be prohibited in some ocean areas and ports, open loop EGC cannot be used on the ships in the whole voyage. 2. The ship, which has installed closed loop EGC, uses artificial alkaline chemical solvent to scrub the exhaust gas and the generated scrubbing residue and wastewater are stored on board and unloaded to shore facilities after arriving at the port. Therefore, the system is complex and takes up a lot of space on board, and the costs of manufacture and operation are high. The costs of manufacture and operation for the facilities and network, which is configured to load a large amount of alkaline materials and residue and wastewater in the port and discharging them on the land, are especially hard to control (the accommodation facilities network in global ports has not kept pace with the implementation of sulfur limit). 3. The existing ship, which installs the hybrid EGC, is presented to be suitable for various marine conditions. It is more complex because the open loop system is added based on the closed loop system, and it takes up more space on board, and the costs of manufacture and operation are higher. Moreover, when the closed loop one of the hybrid system cannot be used due to above reasons, the hybrid system is not real. In another hybrid EGC scheme, the scrubbing water is temporarily stored on board without discharging, but the problems of economic cost and environmental cost of aftertreatment and sailing safety, caused by the out of control of a large amount of scrubbing water stored on board, are thus generated. The influences of added extra stored water on the ship stability and sailing safety are especially prominent in the case that the amount of scrubbing water is generally huge. Furthermore, because a large amount of scrubbing water influences the exhaust resistance, the running of engine can be influenced prominently, which further endangers the ship's ability to resist wind and waves and safe sailing.

Therefore, the status of fulfilling the IMO global ship sulfur limit has posed a challenge to the shipping industry to maintain the original advantages of economy and environmental protection, as well as to fulfill the MARPOL Convention and the PARIS AGREEMENT.

### SUMMARY OF THE INVENTION

The purpose of the present invention is to overcome the deficiencies that the legal sailing in the whole voyage is influenced for the desulfurization ship, which has adopted the existing scheme of seawater exhaust gas scrubbing and ocean discharging, i.e., open loop EGC, because the discharging is prohibited in some ocean area, and to provide a legal process for scrubbing the ship exhaust gas with seawater for desulfurization in the whole voyage and the ships and the applications. Other purposes of the present invention are as follows. The first one is to maintain the existing safety and stability of ships and to prevent the decrease of ship sailing safety caused by the technical means for fulfilling the sulfur limit. The second one is to maintain the existing advantage of cost of ocean shipping, and to prevent the substantial increase of operation cost and fixed cost caused by the technical means for fulfilling the sulfur limit. The third one is to maintain the existing advantage of green and environmental protection on the scheme of seawater scrubbing and desulfurization on ship, and to prevent the substantial increase of artificial chemicals into the natural environment of land area and ocean area, caused by the technical means for fulfilling the sulfur limit.

The first aspect is to provide a process for clean sailing of marine ship, comprising steps of:
a) scrubbing exhaust gas of engine with seawater to generate scrubbing seawater;
b) disposing of the scrubbing seawater in an open loop operation mode, including neutralizing the scrubbing seawater in an open loop operation mode; and/or
c) disposing of the scrubbing seawater in a closed loop operation mode, including:
   i) storing the scrubbing seawater in a storage container; and
   ii) neutralizing the scrubbing seawater in a closed loop operation mode.

The further preferred embodiments are provided as below.

The storage container includes a ballast tank.

The process further comprises mixing the scrubbing seawater and ballast water in the ballast tank.

The process further comprises storing the scrubbing seawater in the storage container and using the scrubbing seawater as ballast water.

Step i) is carried out before step ii); or, step i) is carried out after step ii); or, step i) and step ii) are carried out at the same time.

The process further comprises providing a neutralization equipment for open-closed loop operation, and both of the neutralizing in an open loop operation mode and the neutralizing in a closed loop operation mode are carried out in the neutralization equipment.

The process further comprises providing a neutralization equipment for open loop operation and a neutralization equipment for close loop operation, and the neutralizing in an open loop operation mode is carried out in the neutralization equipment for open loop operation, and the neutralizing in a closed loop operation mode is carried out in the neutralization equipment for closed loop operation.

The process further comprises providing a neutralization equipment for open loop operation, and the neutralizing in an open loop operation mode is carried out in the neutralization equipment for open loop operation, and the neutralizing in a closed loop operation mode is carried out in the storage container.

The neutralizing in an open loop operation mode includes mixing the scrubbing seawater and natural seawater, and/or mixing the scrubbing seawater and an alkaline chemical; and the neutralizing in a closed loop operation mode includes mixing the scrubbing seawater and natural seawater, and/or mixing the scrubbing seawater and an alkaline chemical.

The alkaline chemical is selected from a group consisting of magnesium based alkaline chemical, calcium based alkaline chemical, sodium based alkaline chemical and the combination thereof.

The step of disposing of the scrubbing seawater in a closed loop operation mode further includes: iii) killing organisms in the scrubbing seawater.

The step of killing organisms in the scrubbing seawater includes UV killing treatment, and/or hypochlorite killing treatment, and/or ozone killing treatment.

An inner wall of the storage container and an inner wall of pipes and pumps for transporting the scrubbing seawater to the storage container are configured to be acid resistant.

The second aspect of the present invention is to provide a ship for carrying out the above process for clean sailing of marine ship, comprising:
a scrubber, in which the seawater is used to scrub the exhaust gas to generate scrubbing seawater; and
a storage container.

The further preferred embodiments are provided as below.

The storage container is located near a center point of a ship plane below the ship waterline.

The ship further includes a neutralization equipment for open-closed loop operation, and both of the neutralizing in an open loop operation mode and the neutralizing in a closed loop operation mode are carried out in the neutralization equipment for open-closed loop operation.

The ship further comprises an equipment for supplying natural seawater, and the equipment for supplying natural seawater is configured to provide natural seawater for the neutralization equipment for open-closed loop operation for the purpose of neutralization treatment.

The ship further comprises an equipment for supplying alkaline chemical, and the equipment for supplying alkaline chemical is configured to provide alkaline chemical for the neutralization equipment for open-closed loop operation for the purpose of neutralization treatment.

The ship further comprises a neutralization equipment for open loop operation and a neutralization equipment for close loop operation, and the neutralizing in an open loop operation mode is carried out in the neutralization equipment for open loop operation, and the neutralizing in a closed loop operation mode is carried out in the neutralization equipment for closed loop operation.

The ship further comprises an equipment for supplying natural seawater, and the equipment for supplying natural seawater is configured to provide natural seawater for the neutralization equipment for open loop operation and/or the neutralization equipment for closed loop operation for the purpose of neutralization treatment.

The ship further comprises an equipment for supplying alkaline chemical, and the equipment for supplying alkaline chemical is configured to provide alkaline chemical for the neutralization equipment for open loop operation and/or the neutralization equipment for closed loop operation for the purpose of neutralization treatment.

The ship further comprises a neutralization equipment for open loop operation, and the neutralizing in an open loop operation mode is carried out in the neutralization equipment for open loop operation, and the neutralizing in a closed loop operation mode is carried out in the storage container.

The ship further comprises an equipment for supplying natural seawater, and the equipment for supplying natural seawater is configured to provide natural seawater for the neutralization equipment for open loop operation and/or the storage container for the purpose of neutralization treatment.

The ship further comprises an equipment for supplying alkaline chemical, and the equipment for supplying alkaline chemical is configured to provide alkaline chemical for the neutralization equipment for open loop operation and/or the storage container for the purpose of neutralization treatment.

The ship further comprises an equipment for killing organisms, and the equipment for killing organisms includes an UV killing equipment, and/or a hypochlorite killing equipment, and/or an ozone killing equipment.

Packings are provided in the scrubber to increase the contact area between the seawater and the exhaust gas.

The third aspect of the present invention is to provide a process for cleaning exhaust gas of marine ship, comprising steps of:
a) leading the exhaust gas of ship engine and scrubbing seawater into a scrubber in the course of ship sailing so that the seawater scrubs the engine exhaust gas to absorb sulfur dioxide in the exhaust gas;
b) discharging the exhaust gas, which has met an allowed standard of sulfur content after seawater scrubbing and absorbing, into atmosphere;
c) neutralizing the acid scrubbing wastewater generated in step a) by mixing with alkaline seawater, which is pumped onto the ship, and discharging the wastewater into the ocean after meeting the allowed standard while the ship is sailing in an ocean area where the discharging is allowed;
d) storing the acid scrubbing wastewater generated in step a) in a ballast tank, which is used as storage tank on the ship, while the ship is sailing in an ocean area where the discharging is prohibited; and
e) discharging the scrubbing wastewater, which is stored in the ballast tank that is used as storage tank on the ship, into the ocean after neutralization treatment and/or killing treatment and meeting the allowed standard, and switching the treatment of the scrubbing wastewater generated in step a) to step c) while the ship returns to an ocean area where the discharging is allowed.

In the course of discharging the exhaust gas, which has met an allowed standard of sulfur content after seawater scrubbing and absorbing in step b), the engine exhaust gas is discharged into atmosphere after the sulfur dioxide content in the engine exhaust gas meets the standard required in INTERNATIONAL CONVENTION FOR THE PREVENTION OF POLLUTION FROM SHIPS (MARPOL Annex VI) and relevant regulations.

The further preferred embodiments as provided as below.

In the course that the seawater scrubs the engine exhaust gas to absorb sulfur dioxide in the exhaust gas in step a), the seawater and the exhaust gas pass through a packing layer, which has large-area continuous gas gap and water membrane, to realize sufficient gas-liquid contact and efficient desulfurization scrubbing. In such case, the removing rate of scrubbing sulfur dioxide is high and the needed volume of scrubbing water is small.

The neutralization treatment in step e) includes a neutralization treatment of alkaline seawater and/or a neutralization treatment of alkaline chemicals.

In the course of neutralization treatment of alkaline seawater, the neutralization treatment is carried out by mixing the stored acid scrubbing wastewater and natural seawater, which includes the natural seawater pumped from the ocean into the ship main seawater pipeline and/or the natural seawater for cooling the ship facilities.

In the course of neutralization treatment of alkaline chemicals, the neutralization treatment is carried out by mixing the stored acid scrubbing wastewater and the chemicals including magnesium-based and/or calcium-based and/or sodium-based alkaline chemicals.

The killing treatment in step e) includes killing organisms in the ship ballast water by UV-killing and/or hypochlorite-killing and/or ozone-killing.

In the course of killing treatment in step e), the organisms are killed directly by the low pH value of acid solution of the stored ship ballast water of acid scrubbing wastewater.

In the courses of discharging the scrubbing wastewater, which is stored in the ballast tank as storage tank on the ship, into the ocean after neutralization treatment and/or killing treatment and meeting the allowed standard in step e), the scrubbing wastewater is discharged after meeting the water quality standard required by ship scrubbing water discharge regulations and/or ship ballast water discharge regulations.

In the course of storing the acid scrubbing wastewater in a ballast tank, which is used as storage tank on the ship, in step d), the volume of the ballast tank, which is used as storage tank, is at least 0.3%, or 0.5%, or 1%, or 2%, or 3%, or 4%, or 5%, or 10%, or 15%, or 20%, or 30%, or 40%, or 50%, or 80%, or, at most 0.3%, or 0.5%, or 1%, or 2%, or 3%, or 4%, or 5%, or 10%, or 15%, or 20%, or 30%, or 40%, or 50%, or 80% of the total volume of the ship ballast tanks.

In the course of storing the acid scrubbing wastewater in a ballast tank, which is used as storage tank on the ship, in step d), the acid scrubbing wastewater is stored in the ballast tank located near a center point of a ship plane below the ship waterline.

In the courses of discharging the scrubbing wastewater, which is stored in the ballast tank as storage tank on the ship, into the ocean after treatment and meeting the allowed standard in step e), the scrubbing wastewater is stored for at least 10 minutes, or 20 minutes, or 30 minutes, or 45 minutes, or 1 hour, or 2 hours, or 3 hours, or 6 hours, or 12 hours, or 24 hours, or 36 hours, or 48 hours before discharged into the ocean.

A ship for carrying out the process for cleaning exhaust gas of marine ship of the present invention comprises:
a ship body, an engine, a scrubber, a seawater neutralizer, a ballast tank which is used as storage tank and a killing unit thereof, and a discharging outlet for scrubbing water which has met the allowed standard; wherein the exhaust pipe of the engine is connected with a chimney through the scrubber, an inlet pipe for scrubbing water is connected to the scrubber and is connected with the seawater neutralizer through a discharging pipe for acid scrubbing water, an inlet pipe for seawater neutralization is connected to the seawater neutralizer and is connected with the discharging outlet for scrubbing water which has met the allowed standard through the discharging pipe for scrubbing water, the seawater neutralizer is also connected with the ballast tank which is used as storage tank, the killing unit is connect to the ballast tank, and the killing unit is connected with the seawater neutralizer through a discharging pump for killing water.

The fourth aspect of the present invention is to provide a marine ship for carrying out the above process for cleaning exhaust gas of marine ship, comprising:
a ship body, an engine, a scrubber, a seawater neutralizer, a chemical neutralizer, a ballast tank which is used as storage tank and a killing unit thereof, and a discharging outlet for scrubbing water which has met the allowed standard and a discharging outlet for ballast water which has met the allowed standard; wherein the exhaust pipe of the engine is connected with a chimney through the scrubber, an inlet pipe for scrubbing water is connected to the scrubber and is connected with the seawater neutralizer through a discharging pipe for acid scrubbing water, an inlet pipe for neutralization seawater is connected to the seawater neutralizer and is connected with the discharging outlet for scrubbing water which has met the allowed standard through the discharging pipe for scrubbing water, the seawater neutralizer is connected with the chemical neutralizer and the ballast tank which is used as storage tank, the killing unit and a discharging pipe for ballast water are connect to the ballast tank, and the discharging pipe for ballast water is connected with the discharging outlet for ballast water which has met the allowed standard.

The fifth aspect of the present invention is to provide another ship for carrying out the above process for cleaning exhaust gas of marine ship, comprising:
a ship body, an engine, a scrubber, a ballast tank which is used as storage tank, a seawater neutralizer, and a discharging outlet for scrubbing water which has met the allowed standard; wherein the exhaust pipe of the engine is connected with a chimney through the scrubber, an inlet pipe for scrubbing water is connected to the scrubber and is connected with the seawater neutralizer through a discharging pipe for acid scrubbing water, an inlet pipe for neutralization seawater is connected to the seawater neutralizer and is connected with the discharging outlet for scrubbing water which has met the allowed standard through the discharging pipe for scrubbing water, the seawater neutralizer is also connected with the ballast tank which is used as storage tank through a bi-directional pipe.

The further preferred embodiments are provided as below.

The chemical neutralizer is composed of a container, which is configured for mixing acid scrubbing wastewater and alkaline chemicals, and a tank, which is configured for storing magnesium-based and/or calcium-based and/or sodium-based alkaline chemical materials, and a transporting device.

The killing unit is composed of an acid solution killing device which is configured to use the low pH value of the stored acid scrubbing water to kill the organisms.

The killing unit is composed of the existing ship ballast water killing devices, including UV-killing and/or hypochlorite-killing and/or ozone-killing devices.

The ballast tank, which is used as storage tank, is composed of partial ballast tanks, whose volume is at least 0.3%, or 0.5%, or 1%, or 2%, or 3%, or 4%, or 5%, or 10%, or 15%, or 20%, or 30%, or 40%, or 50%, or 80%, or, at most 0.3%, or 0.5%, or 1%, or 2%, or 3%, or 4%, or 5%, or 10%, or 15%, or 20%, or 30%, or 40%, or 50%, or 80% of the total volume of the ship ballast tanks.

The ballast tank, which is used as storage tank, is composed of ballast tanks, whose volume is configured for storage for at least 10 minutes, or 20 minutes, or 30 minutes, or 45 minutes, or 1 hour, or 2 hours, or 3 hours, or 6 hours, or 12 hours, or 24 hours, or 36 hours, or 48 hours.

The ballast tank, which is used as storage tank, is located near a center point of a ship plane below the ship waterline.

The scrubber is a packing scrubber, wherein fillers having large area continuous gas gap and water membrane are filled in the cavity of the packing scrubber so that the gas-liquid contact is sufficient to realize high-efficiency desulfurization.

The fillers include ring-shaped and/or spherical-shaped and/or strip-shaped and/or saddle shaped-shaped and/or polygon shaped and/or orifice plate shaped and/or multi-heteromorphic shaped fillers.

The scrubber is merged with silencer and has a silence function, so that the scrubber does not occupy the extra space on the ship.

The application scheme on the ship, which uses the process for cleaning exhaust gas of marine ship, includes using the process of the present invention to reduce the sulfur dioxide emissions to the atmosphere in the marine shipping.

The technical principles and effects of the above invention are set forth as follows. In the present invention, the process for cleaning exhaust gas of marine ship and the ship and the application adopt a technical principle of open-closed loop EGC. The standard method of IMO EGC (exhaust gas cleaning) guideline is adopted when the marine ship is sailing in the general ocean area, i.e., the desulfurization method that only seawater is used for exhaust gas scrubbing and discharging while sailing. When the ship enters into some water area where the discharging of scrubbing water is prohibited, the sweater is still used to scrub the exhaust gas for desulfurization, but the scrubbing wastewater is stored in the ship storage tank and/or the ballast tank which is used as the storage tank. After the ship returns to the general ocean area, the stored scrubbing water, which has met the allowed standard of water quality required by the ship scrubbing water discharging regulations and/or ballast water discharging regulations after the natural neuralization treatment and/or chemicals neutralization treatment and the killing treatment, is discharged into the ocean. The running of the ship EGC system is switched to the standard mode of IMO EGC guideline. The ballast tank, which has used as the storage tank, is used as the ballast tank again. Ballast tanks are not occupied in most ocean areas during the whole voyage. Furthermore, because the scrubbing efficiency is high and the volume of needed scrubbing water is small in the present invention, the one benefit is that the proportion of the ballast tank, which is used as the storage tank temporarily, in the total volume of ballast tanks can be configured to be a limited value so that the ship sailing safety is not influenced, and the other benefit is that the operation cost (energy consumption) and the fixed cost (occupied space) for fulfilling the sulfur limit are low. In general, the present invention has achieved the technical effects that the marine ship sailing meets the requirement of the new regulations of sulfur limit of the United Nations and the shipping cost and environmental benefits are still maintained in the whole voyage, which has achieved the purpose of the present invention.

Because the open-closed loop operation, mainly including the switch of the scrubbing water treatment, is relatively complex, which increases the possibility that the patency capacity of the scrubbing water influences the patency capacity of the scrubber exhaust. In order to avoid that the engine exhaust is blocked and to ensure the absolute safety of the ship engine running and ship sailing, the process and device of water sealed safety bypass valve are used. The sixth purpose of the present invention is to provide a process for cleaning the ship exhaust gas safely, comprising steps of:
a) leading the exhaust gas of ship engine and scrubbing water into a scrubber so that the scrubbing water scrubs the exhaust gas of engine to absorb the sulfur dioxide in the exhaust gas;
b) discharging the exhaust gas, in which the sulfur content has met the allowed standard after scrubbing and absorbing, into the atmosphere through a chimney on the top of the scrubber;
c) discharging the acid scrubbing water, which has absorbed the sulfur dioxide after scrubbing, into a container, which is communicated with the atmosphere, through a water seal of the scrubber, wherein the flow capacity of the water seal of the scrubber is configured so that the engine exhaust gas can pass safely and the height of water column of the water seal of the scrubber is configured to be equal to the upper limit of safety air pressure of scrubber; and
d) discharging the acid scrubbing water in the container into a water quality recovery system and then discharging the scrubbing water into the ocean after meeting the allowed standard of water quality.

In the existing ship, in order to ensure that the safe running of engine is not influenced by any failures of the EGC system, an emergency bypass damping valve is provided in the engine flue pipe, so that the engine flue gas can be exhausted into the atmosphere without passing through the EGC system by the switch of bypass damping valve when the failure happens in the EGC system. However, because the bypass damping valve must be series connected in engine flue pipe and cannot be removed, it is possible that the failure of the bypass damping valve itself brings the serious result that the stop of engine influences the ship sailing safety. Unfortunately, the structure of the bypass damping valve (double disc airtight) itself is complex and the working condition is bad, and it is difficult to ensure its own reliability. Therefore, it cannot be ensured that the safe running of engine is not influenced by any failures, but the failure rate of the system is increased and the engine safety, i.e., the ship sailing safety, is decreased. The process of the present invention can overcome the drawback that the traditional bypass system of EGC cannot ensure the ship engine safety and sailing safety in existing ship, and provides a process for safely cleaning and a ship in which the engine safe running will not be influenced by any failures of the EGC system.

The further preferred embodiments are provided as follows.

The opening gas pressure of the water seal of the scrubber in step c) is equal to the upper limit value of the safety air pressure of the scrubber.

The seventh aspect of the present invention is to provide a ship for carrying out the above process for safely cleaning the exhaust gas of ship, comprising:
a ship body, an engine, a scrubber, a bypass box of water gas balance and a water quality recovery device; wherein the engine is installed in the lower part of the ship body, the exhaust passage of the engine is connect with the gas inlet of the scrubber, the scrubber includes a water collecting pool and a water seal, the bypass box of water gas balance includes a bypass discharging passage, the water-gas inlet of the bypass box of water gas balance is connected with the water seal, and the water outlet of the bypass box of water gas balance is connected with the water quality recovery system.

The further preferred embodiments are provided as below.

The flow capacity of the water seal is configured so that the engine exhaust gas can pass safely.

The water seal is composed of a sealing structure in which the height of water column is configured to be equal to the upper limit of safety air pressure of scrubber.

The scrubber and the bypass box of water gas balance are composed of high temperature resistant materials.

The technical principle and effects of the above process for safely cleaning exhaust gas of ship and the ship are set forth the as follows. The process for safely cleaning exhaust gas of ship and the ship provided in the present invention adopt a means that the scrubbing water is passed through the water seal of the scrubber and into a container which is communicated with the atmosphere. The water seal can be opened automatically when the back pressure of failure scrubber rises to a value above the preset opening value of gas pressure of the water seal. Then the exhaust gas enters into the container, which is communicated with the atmosphere, to form the bypass passage. Because the flow capacity of the water seal is configured so that the engine exhaust gas can pass safely, the engine safe running is ensured. The technical effects include the following aspects. The first aspect is that the water level of water collecting pool of scrubber, i.e., the water seal, is maintained, which prevents the scrubbing water from entering into the engine flue pipe to hinder the smooth exhaust. The second aspect is that the exhaust gas can pass the bypass to ensure the exhaust safety of engine when the scrubber is blocked. The third aspect is that the introduction of traditional bypass damper (double disc, sealed fan) is prevented to avoid the fatal risk of engine stop, which cannot be separated.

### BRIEF DESCRIPTION OF THE DRAWINGS

Names of components or structures corresponding to the reference numbers in the drawings are provided as below.

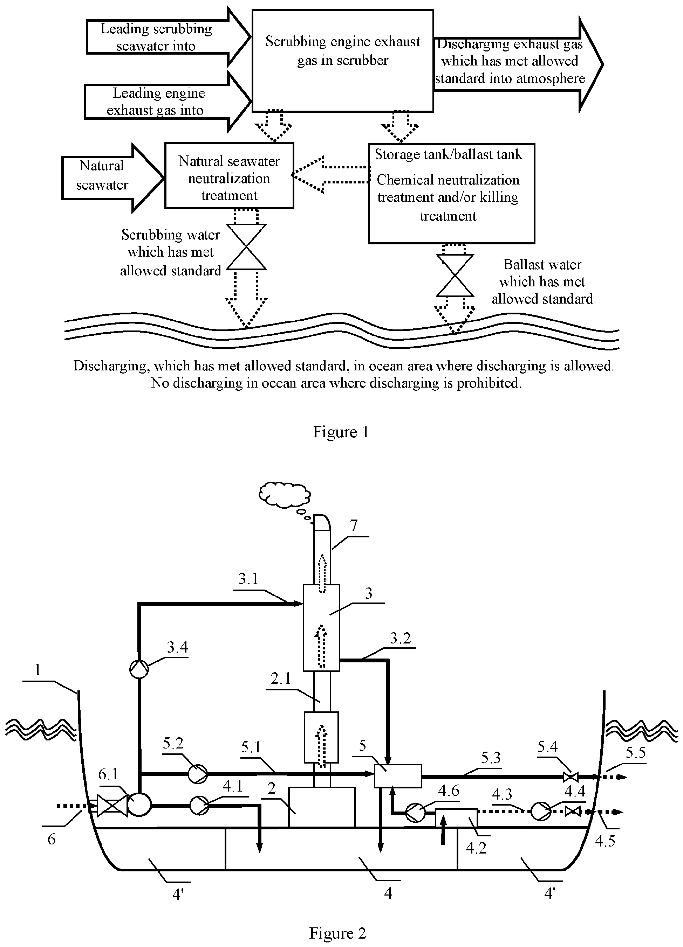

Figure 1 is a schematic diagram showing the steps of an example of a process for clean sailing of marine ship of the present invention, and is also a schematic diagram showing the steps of an example of application scheme on a ship of the process for clean sailing of marine ship of the present invention.
Figure 2 is a schematic diagram showing an example of a technical scheme of ship for carrying out the process for clean sailing of marine ship of the present invention, wherein partial ballast tanks are used as storage tank to store acid scrubbing wastewater on ship, and the seawater neutralizer is connected with the ballast tanks and a pump for killing water.

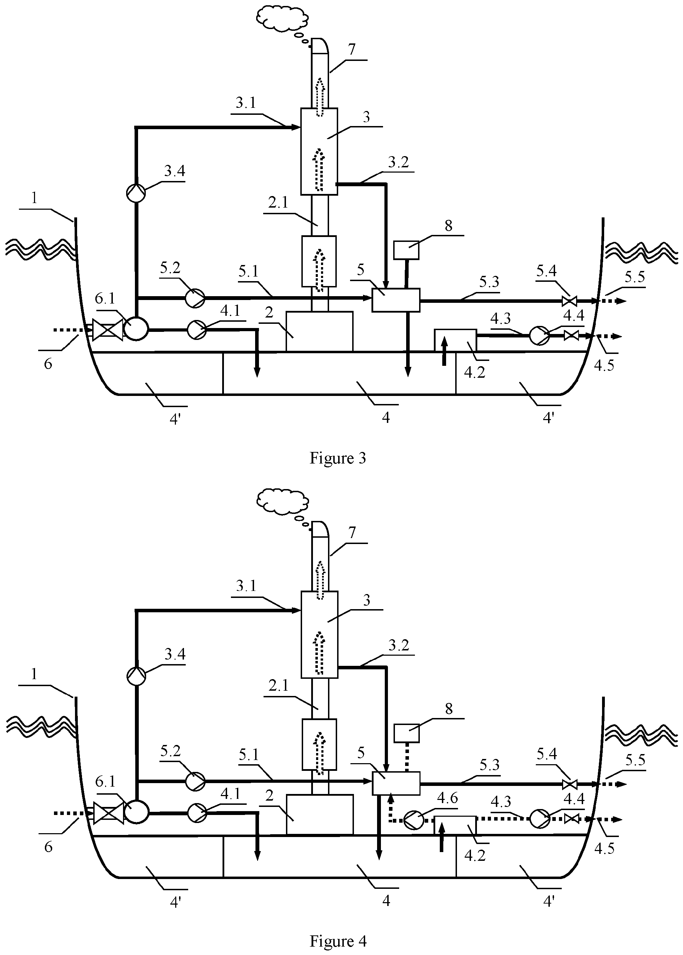

Figure 3 is a schematic diagram showing an example of another technical scheme of ship for carrying out the process for clean sailing of marine ship of the present invention, wherein partial ballast tanks are used as storage tank to store acid scrubbing wastewater on ship, and the seawater neutralizer is connected with a chemical neutralizer and the ballast tanks.
Figure 4 is a schematic diagram showing an example of the combination of the ship technical schemes as shown in Figure 2 and Figure 3, wherein the dotted line in the figure shows that there are two working conditions that can be switched to one of the technical schemes corresponding to figure 2 or figure 3.

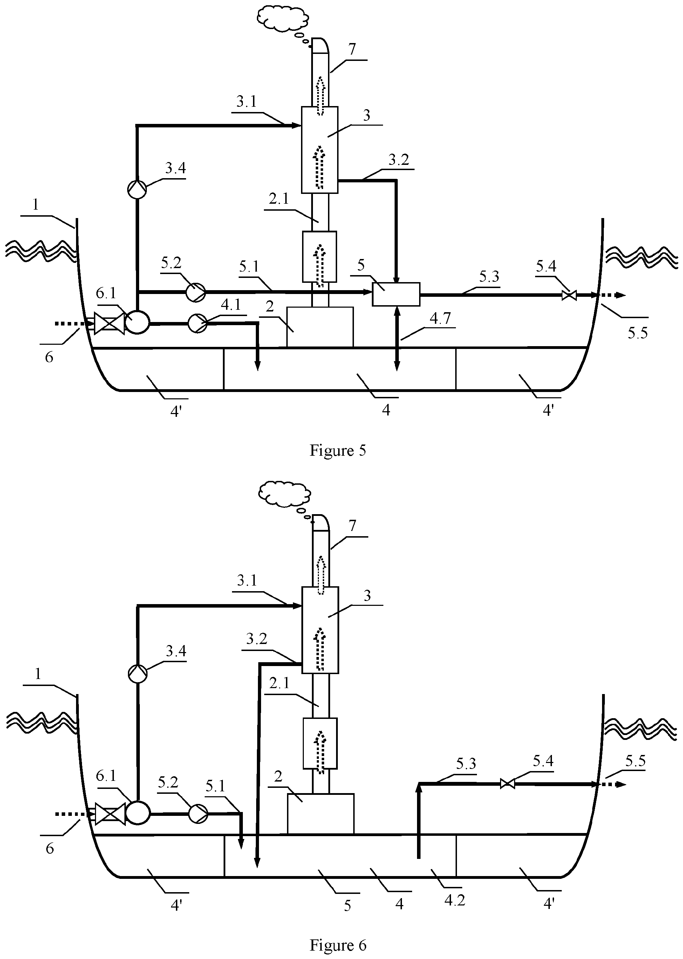

Figure 5 is a schematic diagram showing an example of another technical scheme of ship for carrying out the process for clean sailing of marine ship of the present invention, wherein partial ballast tanks are used as storage tank to store acid scrubbing wastewater on ship, and the seawater neutralizer is connected with the ballast tanks bi-directionally.
Figure 6 is a schematic diagram showing an improved example based on the ship technical scheme as shown in Figure 5, wherein partial ballast tanks are used as storage tank to store acid scrubbing wastewater on ship, and the seawater neutralizer is merged with the ballast tanks.

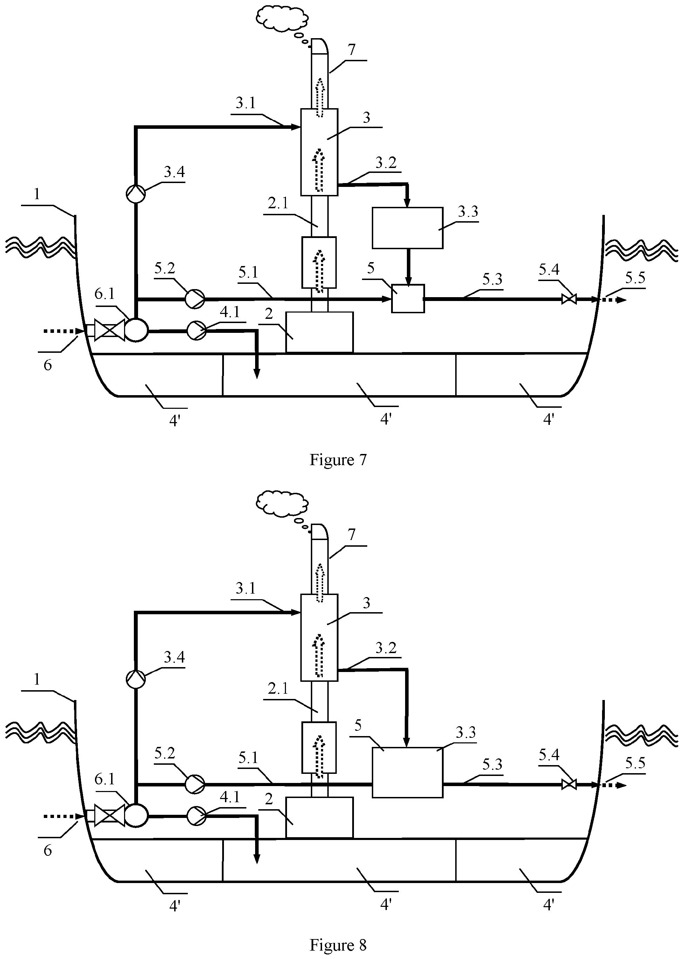

Figure 7 is a schematic diagram showing an example of another technical scheme of ship for carrying out the process for clean sailing of marine ship of the present invention, wherein a storage tank is provided on the ship to store acid scrubbing wastewater, and the seawater neutralizer is connected with the storage tank.
Figure 8 is a schematic diagram showing an improved example based on the ship technical scheme as shown in Figure 7, wherein a storage tank is provided on the ship to store acid scrubbing wastewater, and the seawater neutralizer is merged with the storage tank.

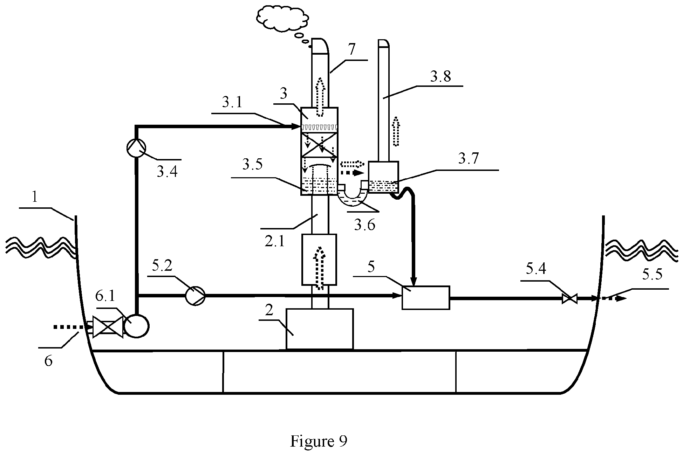

Figure 9 is a schematic diagram showing an example of the process for safely cleaning exhaust gas of ship and the ship of the present invention.

In the drawings:
1-ship body, 2-engine, 2.1-engine exhaust pipe, 3-scrubber, 3.1-inlet pipe for scrubbing water, 3.2-outlet pipe for acid scrubbing water, 3.3-storage tank, 3.4-pump for scrubbing water, 3.5-water collecting pool, 3.6-water seal, 3.7-bypass box of water gas balance, 3.8-bypass discharging passage, 4-ballast tank which is used as storage tank, 4'-general ballast tank, 4.1-inlet pump for ballast water, 4.2-killing unit, 4.3-outlet pipe for ballast water, 4.4-outle pump for ballast water, 4.5-discharging outlet for ballast water which has met the allowed standard, 4.6-outlet pump for killing water, 4.7-bi-directional pipe, 5-seawater neutralizer, 5.1-inlet pipe for neutralization seawater, 5.2-pump for neutralization seawater, 5.3-outlet pipe for scrubbing water, 5.4-cut-off valve for scrubbing wastewater, 5.5- discharging outlet for scrubbing water which has met the allowed standard, 6-submarine entrance of ship, 6.1-main seawater pipeline of ship, 7-chimey, 8-chemical neutralizer

### DETAILED DESCRIPTION OF THE PRERERRED EMBODIMENTS

Combined with the figures and examples, further description of the process for clean sailing of marine ship and the ship of the present invention is provided as below.

### Example 1

These are a group of basic examples of the process for clean sailing of marine ship of the present invention. As shown in Figure 1, the steps in an example comprises:
a) leading the exhaust gas of ship engine and scrubbing seawater into a scrubber in the course of ship sailing so that the seawater scrubs the engine exhaust gas to absorb sulfur dioxide in the exhaust gas;
b) discharging the exhaust gas, which has met an allowed standard of sulfur content after seawater scrubbing and absorbing, into atmosphere;
c) neutralizing the acid scrubbing wastewater generated in step a) by mixing with alkaline seawater, which is pumped onto the ship, and discharging the wastewater into the ocean after meeting the allowed standard while the ship is sailing in an ocean area where the discharging is allowed;
d) storing the acid scrubbing wastewater generated in step a) in a ballast tank, which is used as storage tank on the ship, while the ship is sailing in an ocean area where the discharging is prohibited; and
e) discharging the scrubbing wastewater, which is stored in the ballast tank that is used as storage tank on the ship, into the ocean after neutralization treatment and/or killing treatment and meeting the allowed standard, and switching the treatment of the scrubbing wastewater generated in step a) to step c) while the ship is sailing in an ocean area where the discharging is allowed again.

In step b), the exhaust gas, which has met an allowed standard of sulfur content required in INTERNATIONAL CONVENTION FOR THE PREVENTION OF POLLUTION FROM SHIPS (MARPOL Annex VI) and relevant regulations after seawater scrubbing and absorbing, is discharged into atmosphere.

In another example, the scrubbing wastewater generated in step a) is stored in the ship storage tank while the ship is sailing in an ocean area where the discharging is prohibited in step d), and the scrubbing wastewater, which is stored in the ship storage tank, is discharged into the ocean after treatment and meeting the allowed standard while the ship returns to an ocean area where the discharging is allowed in step e).

### Example 2

These are a group of examples based on Example 1. In an example, the natural seawater is used as the scrubbing water to scrub the engine exhaust gas in step a). In another example, the fresh water is used to scrub the engine exhaust gas in step a). In another example, the engine exhaust gas is scrubbed with seawater first, and then scrubbed with fresh water, and then scrubbed with seawater in step a). This is suitable for the case that the ship is sailing in the ocean first, and then sailing in the inland river, and then sailing in the ocean, which belongs to river-ocean combined transport. However, in most cases, only natural seawater is used for scrubbing.

In another example, in the course that the seawater scrubs the engine exhaust gas in step a), the seawater and the exhaust gas pass through a packing layer, which has large-area continuous gas gap and water membrane, to realize sufficient gas-liquid contact and efficient scrubbing so that the seawater scrubs the engine exhaust gas to absorb sulfur dioxide in the exhaust gas. In this kind of scrubbing method, the flow of exhaust gas is smooth because the gas phase is continuous, and the removing rate of scrubbing sulfur dioxide is high and the needed volume of scrubbing water is small because the contact between the gas and the scrubbing seawater is sufficient. Therefore, as the one aspect, the proportion of the ballast tank, which is used as the storage tank temporarily, in the total volume of ballast tanks is small and can be configured to be a limited value so that the sailing safety of ship can be ensured, and as the other aspect, the operation cost (energy consumption) and the fixed cost (occupied space) for ship to fulfill the sulfur limit are low.

In another examples, the scrubber is merged with silencer to become a scrubbing silencer which has a silence function, and the scrubbing water is used to scrub the engine exhaust gas in it, so that the scrubber does not occupy the extra space on the ship to further reduce the fixed cost.

### Example 3

These are a group of examples based on Example 1. In the course of neutralization treatment in an example, the stored acid scrubbing wastewater is discharged into the ocean after neutralized by the alkaline seawater, which is pumped onto the ship, and meeting the allowed standard of water quality required by ship scrubbing seawater discharging regulations. The alkaline seawater, which is pumped onto the ship, includes the natural seawater in the ship main seawater pipeline, which is pumped from the ocean, and/or the natural seawater for cooling the ship facilities. It is generally required by the discharging regulations that the PH value of the ship scrubbing water after acid-alkali neutralization treatment should reach the water quality standard of 6.0 ∼ 6.5, before the scrubbing water is discharged into the ocean. Other water quality standards, which are required by the discharging regulations for the ship scrubbing water discharging, are recorded in the related technical manual of ship exhaust gas cleaning.

In another example, in the course of discharging the scrubbing wastewater, which is stored in the ballast tank that is used as storage tank on the ship, into the ocean after neutralization treatment and/or killing treatment and meeting the allowed standard in step e), the stored scrubbing wastewater is discharged into the ocean after chemical neutralization treatment and/or killing treatment to meet the water quality standard, which is required by the ship scrubbing water discharging regulations and ballast water discharging regulations. In the course chemical neutralization treatment, the alkaline chemical is added into the acid scrubbing water. In a group of examples, the alkaline chemicals are magnesium based alkaline solution, calcium based alkaline solution, sodium based alkaline solution, and mixed alkaline solutions of magnesium base and calcium base and sodium base respectively. It is required by the legal provisions that killing treatment for ballast water should be carried out to all the scrubbing wastewater, to which the chemical neutralization treatment has been implemented, before discharged into the ocean according to the ballast water discharging rules. Therefore, in a group of examples, killing treatments for ballast water are acid solution killing, ultraviolet killing, hypochlorite killing and ozone killing respectively. The acid solution killing is a killing method of using low pH value of stored acid scrubbing wastewater directly. The ultraviolet killing, hypochlorite killing and ozone killing are the existing killing treatment of ballast water on ship. The water quality standard, which should be met and is required by the ship scrubbing water discharging regulations, is the same as the one in previous example. The water quality standard, which is required by the ship ballast water discharging regulations, is recorded in the related technical manual of ship ballast water treatment.

In another example, in the course of discharging the scrubbing wastewater, which is stored in the ballast tank that is as storage tank on the ship, into the ocean after neutralization treatment and/or killing treatment and meeting the allowed standard in step e), the stored scrubbing wastewater is discharged into the ocean after killing treatment and then neutralization treatment with alkaline seawater on board to meet the water quality standard, which is required by the ship scrubbing water discharging regulations and ballast water discharging regulations.

### Example 4

There are a group of examples based on Example 1. The ship ballast tank, which contains the ballast water to adjust the gravity center and ship stability, is important facilities for ensuring the safe sailing of ship. In these examples, the proportion of volume of the ballast tank, which is used as the storage tank for storing the scrubbing wastewater, in the total volume of ballast tanks is configured to be a limited value to ensure that the sailing safety of ship is not influenced. The volume of the ballast tank, which is used as storage tank, is configured to be a value which is at least 0.3%, or 0.5%, or 1%, or 2%, or 3%, or 4%, or 5%, or 10%, or 15%, or 20%, or 30%, or 40%, or 50%, or 80%, or, at most 0.3%, or 0.5%, or 1%, or 2%, or 3%, or 4%, or 5%, or 10%, or 15%, or 20%, or 30%, or 40%, or 50%, or 80% of the total volume of the ship ballast tanks respectively. The different configured value is determined according to different ship load, ballast tank volume and voyage distance that the discharging of scrubbing is prohibited on the route.

### Example 5

In another example based on Example 1, in the course of storing the acid scrubbing wastewater in a ballast tank which is used as storage tank on the ship, the acid scrubbing wastewater is stored in the ballast tank located near a center point of a ship plane below the ship waterline.

### Example 6

These are another group of examples based on Example 1. In an example, in the courses of discharging the scrubbing wastewater, which is stored in the storage tank and/or the ballast tank that is used as storage tank on the ship, into the ocean after treatment and meeting the allowed standard in step d), the scrubbing wastewater is stored for at least 10 minutes before discharged into the ocean. In another example, the scrubbing wastewater is stored for at least 20 minutes before discharged into the ocean. In another example, the scrubbing wastewater is stored for at least 30 minutes before discharged into the ocean. In another example, the scrubbing wastewater is stored for at least 45 minutes before discharged into the ocean. In another example, the scrubbing wastewater is stored for at least 1 hour before discharged into the ocean.

In another group of examples are as follows. In an example, in the courses of discharging the scrubbing wastewater, which is stored in the storage tank and/or the ballast tank that is as storage tank on the ship, into the ocean after treatment and meeting the allowed standard in step d), the scrubbing wastewater is stored for at least 2 hours before discharged into the ocean. In another example, the scrubbing wastewater is stored for at least 3 hours before discharged into the ocean. In another example, the scrubbing wastewater is stored for at least 6 hours before discharged into the ocean. In another example, the scrubbing wastewater is stored for at least 12 hours before discharged into the ocean. In another example, the scrubbing wastewater is stored for at least 24 hours before discharged into the ocean. In other two examples, the scrubbing wastewater is stored for at least 36 hours and 48 hours before discharged into the ocean respectively. The needed storage time for scrubbing wastewater before discharged into the ocean is determined according to ship voyage time needed in the area where the discharging of scrubbing water is prohibited. For example, if about 30 minutes are needed from the moment, when the ship enters into a port area where the discharging of scrubbing water is prohibited, to the moment, when the ship docks, the single voyage time of prohibited discharging will be about 30 minutes, then the storage time for scrubbing wastewater for ship to enter and leave the port area is two times of single voyage time of prohibited discharging, i.e., about 1 hour. The discharge of auxiliary machinery is small when the ship berths in port, and there is no emission if the shore power is used. The storage time for scrubbing water, which the ship can provide, can be determined by calculating the production volume of EGC scrubbing water and the volume of storage tank with the existing technology.

### Example 7

This a basic example of a technical scheme of ship for carrying out the process for clean sailing of marine ship of the present invention, and is also a usage example of the process for clean sailing of marine ship of Example 1. As shown in Figure 2 or Figure 4 (the dotted line corresponds to the working condition in Figure 2), it comprises a ship body 1, an engine 2, a scrubber 3, a seawater neutralizer 5, a ballast tank which is used as storage tank 4 and a killing unit 4.2 thereof, and a discharging outlet for scrubbing water which has met the allowed standard 5.5; wherein the exhaust pipe 2.1 of the engine 2 is connected with a chimney 7 through the scrubber 3, an inlet pipe for scrubbing water 3.1 is connected to the scrubber 3 and is connected with the seawater neutralizer 5 through a discharging pipe for acid scrubbing water 3.2, an inlet pipe for seawater neutralization 5.1 is connected to the seawater neutralizer 5 and is connected with the discharging outlet for scrubbing water which has met the allowed standard 5.5 through the discharging pipe for scrubbing water 5.3, the seawater neutralizer 5 is also connected with the ballast tank which is used as storage tank 4, the killing unit 4.2 is connect to the ballast tank 4, and is connected with the seawater neutralizer 5 through a discharging pump for killing water 4.6.

In this example, the standard method of IMO EGC (exhaust gas cleaning) guideline, i.e., the open loop EGC system that only seawater is used for scrubbing and discharging, is adopted when the marine ship is sailing in the general seawater area where the discharging of scrubbing seawater is allowed. The ship engine exhaust gas and scrubbing seawater are led into the scrubber 3 so that the engine exhaust gas is scrubbed with the seawater. The generated acid scrubbing water is discharged into the seawater neutralizer 5 through the outlet pipe 3.2, and then is neutralized by the alkaline seawater, which is introduced through the inlet pipe for neutralization seawater 5.1, in the seawater neutralizer 5 to meet the allowed standard of water quality required by the ship scrubbing water discharging regulations, and then is discharged into the ocean from the discharging outlet for scrubbing water which has met the allowed standard 5.5 through the opened cut-off valve for scrubbing wastewater 5.4.

While the ship is sailing in the ocean area where the discharging of scrubbing water is prohibited, the exhaust gas is still scrubbed with the seawater for desulfurization, and the ship engine exhaust gas and the scrubbing seawater are still led into the scrubber 3 so that the engine exhaust gas is scrubbed with the seawater. The generated acid scrubbing water is still discharged into the seawater neutralizer 5 through the outlet pipe 3.2 and the exhaust gas cleaning goes on. It is different that at this time, the connection channel for seawater neutralizer 5 and the ballast tank which is used as storage tank 4 is opened, so that the acid scrubbing water enters into the ballast tank which is used as storage tank 4 and then is stored. The cut-off valve for scrubbing wastewater 5.4 is closed and the running of the pump for neutralization seawater 5.2 is stopped. In this case, no scrubbing water is discharged into the ocean, and the cleaning mode of ship exhaust gas is switched to a closed loop operation mode.

While the ship returns to the ocean area where the discharging of scrubbing water is allowed, the exhaust gas is still scrubbed by the seawater for desulfurization. It is different that the cut-off valve for scrubbing wastewater 5.4 is opened, and the pump for neutralization seawater 5.2 is started to supply water, and the connection channel for seawater neutralizer 5 and the ballast tank which is used as storage tank 4 is closed, so that the acid scrubbing water generated in the scrubber 3 is discharged into the seawater neutralizer 5 through the outlet pipe 3.2. The acid scrubbing water is neutralized by the alkaline seawater, which is introduced from the inlet pipe for neutralization seawater 5.1, in the neutralizer 5 to meet the allowed standard of water quality required by the ship scrubbing water discharging regulations, and then is discharged into the ocean from the discharging outlet for scrubbing water which has met the allowed standard 5.5 through the opened cut-off valve for scrubbing wastewater 5.4, thus switching to the open loop operation mode. At the same time, the outlet pump for killing water 4.6 is started so that the acid scrubbing water, which was stored in the ballast tank as storage tank 4 and has been killing-treated by killing unit 4.2 to fulfil the ballast water discharging regulations, is discharged into the seawater neutralizer 5, and then joins the acid scrubbing water, which is introduced from the outlet pipe 3.2 of the scrubber 3, in the seawater neutralizer 5, and then is neutralized by the alkaline seawater, which is introduced from the inlet pipe for neutralization seawater 5.1, to meet the allowed standard of water quality required by the ship scrubbing water discharging regulations, and then is discharged into the ocean from the discharging outlet for scrubbing water which has met the allowed standard 5.5 through the cut-off valve for scrubbing wastewater 5.4. While all of the acid scrubbing seawater, which is stored in the ballast tank that is used as storage tank 4, has been discharged, the flow volume of the pump for neutralization seawater 5.2 is increased according to the requirements.

In this example, the opening or closing of the connection channel is realized by the existing technology of providing valve and/or pump in the channel.

In this example, only seawater is used to scrub the engine exhaust gas and to treat the scrubbing wastewater in the whole ship voyage, and no alkaline chemicals are added. Moreover, the killing device for scrubbing wastewater is provided, and the scrubbing wastewater meets the ship scrubbing water discharging regulations and the ship ballast water discharging regulations and the allowed standard.

### Example 8

This is another basic example of the ship technical scheme for carrying out the process for clean sailing of marine ship, and is also an example of the usage of the process for clean sailing of marine ship of Example 1. As shown in Figure 3 or Figure 4 (the dotted line corresponds to the working condition in Figure 3), it comprises a ship body 1, an engine 2, a scrubber 3, a seawater neutralizer 5, a chemical neutralizer 8, a ballast tank which is used as storage tank 4 and a killing unit 4.2 thereof, and a discharging outlet for scrubbing water which has met the allowed standard 5.5 and a discharging outlet for ballast water which has met the allowed standard 4.5; wherein the exhaust pipe 2.1 of the engine 2 is connected with a chimney 7 through the scrubber 3, an inlet pipe for scrubbing water 3.1 is connected to the scrubber 3 and is connected with the seawater neutralizer 5 through a discharging pipe for acid scrubbing water 3.2, an inlet pipe for seawater neutralization 5.1 is connected to the seawater neutralizer 5 and is connected with the discharging outlet for scrubbing water which has met the allowed standard 5.5 through the discharging pipe for scrubbing water 5.3, the seawater neutralizer 5 is also connected with the chemical neutralizer 8 and the ballast tank which is used as storage tank 4, the killing unit 4.2 and an outlet pipe for ballast water 4.3 is connect to the ballast tank 4, and the outlet pipe for ballast water 4.3 is connected with the discharging outlet for ballast water which has met the allowed standard 4.5.

In this example, while the marine ship is sailing in the general seawater area where the discharging of scrubbing seawater is allowed, the standard method of IMO EGC (exhaust gas cleaning) guideline, i.e., the open loop EGC system that only seawater is used for scrubbing and discharging, is adopted. The ship engine exhaust gas and scrubbing seawater are led into the scrubber 3 so that the engine exhaust gas is scrubbed with the seawater. The generated acid scrubbing water is discharged into the seawater neutralizer 5 through the outlet pipe 3.2, and then is neutralized by the alkaline seawater, which is introduced through the inlet pipe for neutralization seawater 5.1, in the seawater neutralizer 5 to meet the allowed standard of water quality required by the ship scrubbing water discharging regulations, and then is discharged into the ocean from the discharging outlet for scrubbing water which has met the allowed standard 5.5 through the opened cut-off valve for scrubbing wastewater 5.4.

While the ship is sailing in the ocean area where the discharging of scrubbing water is prohibited, the exhaust gas is still scrubbed with the seawater for desulfurization, and the ship engine exhaust gas and the scrubbing seawater are still led into the scrubber 3 so that the engine exhaust gas is scrubbed with the seawater. The generated acid scrubbing water is still discharged into the seawater neutralizer 5 through the outlet pipe 3.2 and the exhaust gas cleaning goes on. It is different that at this time, the connection channel for seawater neutralizer 5 and the ballast tank which is used as storage tank 4 is opened, so that the acid scrubbing water enters into the ballast tank which is used as storage tank 4 and then is stored. The chemical neutralizer 8 is opened so that the acid scrubbing water is neutralized by the alkaline chemicals to carry out the chemical neutralization treatment. The cut-off valve for scrubbing wastewater 5.4 is closed and the running of the pump for neutralization seawater 5.2 is stopped. In this case, no scrubbing water is discharged into the ocean, and the cleaning mode of ship exhaust gas is switched to a closed loop operation mode.

While the ship returns to the ocean area where the discharging of scrubbing water is allowed, the exhaust gas is still scrubbed by the seawater for desulfurization. It is different that the cut-off valve for scrubbing wastewater 5.4 is opened, and the pump for neutralization seawater 5.2 is started to supply water, and the connection channel for seawater neutralizer 5 and the ballast tank which is used as storage tank 4 is closed, and the connection channel for chemical neutralizer 8 and seawater neutralizer 5 is closed, and the acid scrubbing water generated in the scrubber 3 is discharged into the seawater neutralizer 5 through the outlet pipe 3.2. The acid scrubbing water is neutralized by the alkaline seawater, which is introduced from the inlet pipe for neutralization seawater 5.1, in the neutralizer 5 to meet the allowed standard of water quality required by the ship scrubbing water discharging regulations, and then is discharged into the ocean from the discharging outlet for scrubbing water which has met the allowed standard 5.5 through the opened cut-off valve for scrubbing wastewater 5.4, thus switching to the open loop operation mode. At the same time, the outlet pump for ballast water 4.4 is started so that the acid scrubbing water, which was stored in the ballast tank that is used as storage tank 4 and has been killing-treated by killing unit 4.2 to fulfil the scrubbing water discharging regulations and the ballast water discharging regulations, is discharged into the ocean through the discharging outlet for ballast water which has met the allowed standard 4.5.

In this example, the opening or closing of the connection channel is realized by the existing technology of providing valve and/or pump in the channel.

In this example, only seawater is used to scrub the engine exhaust gas in the whole ship voyage, and alkaline chemicals are added into the scrubbing wastewater. Moreover, the killing device for scrubbing wastewater is provided, and the scrubbing wastewater meets the ship scrubbing water discharging regulations and the ship ballast water discharging regulations and the allowed standard.

### Example 9

This is another basic example of the ship technical scheme for carrying out the process for clean sailing of marine ship, and is also a usage example of the process for clean sailing of the marine ship of Example 1. As shown in Figure 5, it comprises a ship body 1, an engine 2, a scrubber 3, a ballast tank which is used as storage tank 4, a seawater neutralizer 5, and a discharging outlet for scrubbing water which has met the allowed standard 5.5; wherein the exhaust pipe 2.1 of the engine 2 is connected with a chimney 7 through the scrubber 3, an inlet pipe for scrubbing water 3.1 is connected to the scrubber 3 and is connected with the seawater neutralizer 5 through a discharging pipe for acid scrubbing water 3.2, an inlet pipe for seawater neutralization 5.1 is connected to the seawater neutralizer 5 and is connected with the discharging outlet for scrubbing water which has met the allowed standard 5.5 through the discharging pipe for scrubbing water 5.3. The seawater neutralizer 5 is also connect with ballast tank which is used as storage tank 4 through the bi-directional pipe 4.7.

In this example, most of the ship voyage is in the ocean area where the scrubbing water discharging is allowed by international regulations, including that the ship returns to the ocean area where the scrubbing water discharging is allowed from the ocean area where the scrubbing water discharging is prohibited, and the ship adopts the mode of only using natural seawater for scrubbing and discharging, i.e., the open loop operation mode.

While the ship is sailing in the ocean area where the discharging of scrubbing water is prohibited, the exhaust gas is still scrubbed with the seawater for desulfurization. The generated acid scrubbing water is discharged into the ballast tank which is used as storage tank 4 and then is stored from the seawater neutralizer 5 through the bi-directional pipe 4.7. The cut-off valve for scrubbing wastewater 5.4 is closed and the running of the pump for neutralization seawater 5.2 is stopped. In this case, no scrubbing water is discharged into the ocean, and the cleaning mode of ship exhaust gas is switched to a closed loop operation mode.

While the ship returns to the ocean area where the discharging of scrubbing water is allowed, the exhaust gas is still scrubbed by the seawater for desulfurization, which is the same. Besides the operation of scrubbing water discharging is switched to the open loop operation mode, the acid scrubbing water, which is stored in the ballast tank which is used as storage tank 4, is led into the seawater neutralizer 5 from the bi-directional pipe 4.7. The acid scrubbing water is neutralized by the neutralization seawater, which is introduced from the inlet pipe for neutralization seawater 5.1, in the neutralizer 5 to meet the allowed standard of water quality required by the ship scrubbing water discharging regulations, and then is discharged into the ocean. While all of the acid scrubbing seawater, which is stored in the ballast tank that is used as storage tank, has been discharged, the flow volume of the pump for neutralization seawater 5.2 is increased according to the requirements.

The transportation direction of the bi-directional pipe 4.7 is realized by the existing technology of providing valve and/or pump in the channel.

An improved example of above example is shown in Figure 6, wherein the seawater neutralizer 5 is merged with the ballast tank which is used as storage tank 4, so that the system is simplified, but the function remains unchanged.

In this example, only seawater is used to scrub the engine exhaust gas and to treat the scrubbing wastewater in the whole ship voyage, and no alkaline chemicals are added. In this example, because the area where the scrubbing water discharging is prohibited is close to the area where the scrubbing water discharging is allowed in the ship route, and the storage time for scrubbing water is short and the ballast water is not regarded to be in different ocean areas, killing treatment is not needed. The scrubbing wastewater meets the ship scrubbing water discharging regulations and the allowed standard.

### Example 10

This is another basic example of a technical scheme of ship for carrying out the process for clean sailing of marine ship of the present invention, and is also a usage example of the process for clean sailing of marine ship of Example 1. As shown in Figure 7, it comprises a ship body 1, an engine 2, a scrubber 3, a storage tank 3.3 and a seawater neutralizer 5, and a discharging outlet for scrubbing water which has met the allowed standard 5.5; wherein the exhaust pipe 2.1 of the engine 2 is connected with a chimney 7 through the scrubber 3, an inlet pipe for scrubbing water 3.1 is connected to the scrubber 3 and is connected with the storage tank 3.3 through a discharging pipe for acid scrubbing water 3.2. The storage tank 3.3 is connected with the seawater neutralizer 5. An inlet pipe for seawater neutralization 5.1 is connected to the seawater neutralizer 5 and is connected with the discharging outlet for scrubbing water which has met the allowed standard 5.5 through the discharging pipe for scrubbing water 5.3.

In another example based on above example, the storage tank 3.3 is merged with the seawater neutralizer 5, as shown in Figure 8.

In this example, only seawater is used to scrub the engine exhaust gas and to treat the scrubbing wastewater in the whole ship voyage, and no alkaline chemicals are added. This example is similar to Example 10, and the area where the scrubbing water discharging is prohibited is close to the area where the scrubbing water discharging is allowed in the ship route, and the storage time for scrubbing water is short and the ballast water is not regarded to be in different sea areas, killing treatment is not needed. The scrubbing wastewater meets the ship scrubbing water discharging regulations and the allowed standard.

### Example 11

These are a group of examples based on Examples 7, 8, 9 and 10. The ballast tank which is used as storage tank 4 and the storage tank 3.3 are composed of partial ballast tanks whose volumes are configured so that the scrubbing wastewater is stored for at least 10 minutes, or 20 minutes, or 30 minutes, or 45 minutes, or 1 hour, or 2 hours, or 3 hours, or 6 hours, or 12 hours, or 24 hours, or 36 hours, or 48 hours respectively. The ballast tank which has been used as storage tank is still used as the general ballast tank while it does not store the scrubbing wastewater.

### Example 12

These are a group of examples based on Examples 7, 8, 9 and 10. The volume of the ballast tank which is used as storage tank 4 is composed of partial ballast tanks whose volume is configured to be a value which is at least 0.3%, or 0.5%, or 1%, or 2%, or 3%, or 4%, or 5%, or 10%, or 15%, or 20%, or 30%, or 40%, or 50%, or 80%, or, at most 0.3%, or 0.5%, or 1%, or 2%, or 3%, or 4%, or 5%, or 10%, or 15%, or 20%, or 30%, or 40%, or 50%, or 80% of the total volume of the ship ballast tanks.

In another group of examples based on Examples 7, 8, 9 and 10, the ballast tank which is used as storage tank 4 is composed of the ballast bank located near a center point of a ship plane below the ship waterline, or is composed of the separated ballast bank located near a center point of a ship plane below the ship waterline.

### Example 13

These are a group of examples based on Example 8. In an example, the chemical neutralizer 8, which is installed on the ship, is composed of a tank for storing magnesium based alkali materials and a device for transporting alkali solution. The tank for storing magnesium based alkali materials is a tank of magnesium hydroxide liquid materials and the device for transporting alkali solution is composed of the pump for alkali solution and a valve. In another example, the tank for storing materials of the chemical neutralizer 8 is composed of a tank for magnesium hydroxide solid materials and a tank for producing alkali solution.

In another example, the chemical neutralizer 8 is composed of a tank for calcium oxide solid materials, a tank for producing alkali solution, and a measure pump for alkali solution, which are connected together.

In another example, the chemical neutralizer 8, is composed of a tank for storing sodium hydroxide solution materials, a measure pump for alkali solution, and a valve which are connected together. The alkali solution of sodium hydroxide of 10% to 60% is stored in the tank for storing sodium hydroxide solution materials. In most cases, the concentration of the sodium hydroxide in the tank is about 30% to 50%. In the ocean area of high latitude, the concentration of the sodium hydroxide should be 20% to prevent the freeze of solution.

In above examples, regarding the chemical neutralizer, the existing conventional industrial device for adding alkali is selected. The size is not large, and the cost is low.

### Example 14

These are a group of examples based on Examples 7 and 8. In an example, the installed killing unit 4.2 is composed of the existing UV-killing device of ship ballast water treating system. In another example, the installed killing unit 4.2 is composed of the existing ozone-killing device of ship ballast water treating system. In another example, the installed killing unit 4.2 is composed of the existing sodium hypochlorite killing device of ship ballast water treating system. In above examples, all of the ship killing units 4.2 are existing killing device of the ship ballast system treating system.

Another example is similar with the one as shown in Figures 5, 6, 7 and 8. The killing unit is composed of acid solution killing device, which is a device of using the stored acid wastewater in the scrubber for killing directly, that is designed according to the living time of organisms in the low pH solution (for example, 20 minutes when pH is 3). In such case, it can be regarded that the ballast tank which is used as storage tank 4 is merged with the killing unit 4.2. In another example, the storage tank 3.3 is merged with the killing unit 4.2.

### Example 15

These are a group of examples based on Example 6 or Example 7. The installed scrubber 3 is a packing scrubber, wherein fillers having large area continuous gas gap and water membrane, i.e., the wet surface, are filled in the cavity of the packing scrubber so that the gas-liquid contact is sufficient to realize high-efficiency desulfurization. The fillers include ring-shaped, spherical-shaped, strip-shaped, saddle shaped, polygon shaped, and orifice plate shaped respectively, as well as multi-heteromorphic shaped fillers that various shapes is combined. The scrubbing of packings, wherein have large area continuous gas gap and wet surface, is used so that the efficiency of removing the sulfur dioxide is high and the needed volume of scrubbing water is small. The one benefit is that the proportion of the volume of the ballast tank, which is used as the storage tank temporarily, in the total volume of ship ballast tanks can be configured to be a limited value so that the sailing safety of ship is not influenced. The other benefit is that the operation cost (energy consumption) and the fixed cost (occupied space) for ship to fulfill the sulfur limit are low.

In another example, the installed scrubber 3 is a cavity spray scrubber. In another example, packings, a Venturi injection unit and a bubble scrubber are included in the installed scrubber 3. All of the scrubbers in above examples are the existing scrubber in chemical industry.

In another example, the installed scrubber 3 is merged with silencer and has a silence function, which has a high efficiency of scrubbing and a small size in the work condition of seawater and/or fresh water scrubbing. Therefore, both of silencing and high efficiency scrubbing of exhaust gas are realized. The key is that extra ship space is not needed, which further reduces the fixed cost and operation cost of ship.

### Example 16

This is a usage example of the process for clean sailing of marine ship of Example 1. As shown in Figure 1 and Figure 2, in this example, the ship is an ocean tanker with 40,200 DWT and engine power of 8,580KW. The heavy diesel (380CST) of 3.5% sulfur is used. The ballast tanks have a total volume of 20,650m³. The one-way routine route of the ship is about 6,000km. There is a port area where the scrubbing water discharging is prohibited. The one-way entrance to the port takes about 1 hour. In the round-trip voyage plan, the scrubbing water discharging is prohibited for 2.5 hours. The ballast tank which is used as the storage tank is composed of a space of about 1000m³ separated from the ballast bank located near a center point of a ship plane below the ship waterline. The limited range of the proportion of this volume in the total volume of the ship ballast tanks is configured to be 0.3% - 5%.

In this example, the exhaust gas cleaning mode of the ship is an economic operation mode of only using the seawater for scrubbing and discharging when the ship is sailing in most ocean area including the high seas. The energy consumption is about 1% of the corresponding engine power. During the period of entering into and leaving the port area where the scrubbing water discharging is prohibited, the scrubbing wastewater is stored in the ballast tank which is temporarily used as the storage tank. In this example, the ship adopts a design of efficient packing scrubbing, and the volume of the scrubbing water generated per hour in the full load voyage is about 0.5% of the total volume of the ballast tanks, and the configured volume of the storage tank can ensure that the scrubbing water is not discharged for the voyage of 2.5 hours. During the period of loading and unloading, the main propulsion engine is shut down, and only the auxiliary engine is running or even shut down (using shore power). After the ship leaves the ocean area where the scrubbing water discharging is prohibited, the outlet pump for killing water is started to carrying out the killing treatment to the acid scrubbing water, which was stored in the ballast tank temporarily, to meet the allowed standard of water quality required by the ballast water discharging regulations, and then is discharged into the seawater neutralizer. After neutralized by the introduced alkaline seawater to the allowed standard of pH value of EGC discharge required by the IMO regulations, the scrubbing wastewater is discharged into the ocean (other indicators of discharging water quality are guaranteed by the existing technology). While all of the stored acid scrubbing seawater has been discharged, the flow volume of the pump for neutralization seawater is increased. At this time, the running of the EGC system has been switched to a mode of using seawater for scrubbing and discharging.

In this example, the energy consumption of ship exhaust gas cleaning during the whole voyage is basically maintained at 1% of the corresponding engine power, and no alkaline chemical is added. The scrubbing wastewater meets the ship scrubbing water discharging regulations and ship ballast water discharging regulations and the allowed standard.

### Example 17

This is another usage example of the process for clean sailing of marine ship of Example 1. As shown in Figure 1 and Figure 3, in this example, the ship is an ocean-going bulk cargo ship with 180,000 DWT and engine power of 15MW. The heavy diesel (380CST) of 3.5% sulfur is used. The ballast tanks have a total volume of 90,650m³. The one-way routine route of the ship is about 10,000km. There is a port area where the scrubbing water discharging is prohibited. The one-way entrance to the port takes about 2 hours. In the round-trip voyage plan, the scrubbing water discharging is prohibited for 4.5 hours. In this example, when the ship is sailing in the general ocean area including the high seas, the exhaust gas cleaning device is running in a standard mode of IMO EGC guideline, which only uses seawater for scrubbing and discharging. During the period of entering into and leaving the port area where the scrubbing water discharging is prohibited, the scrubbing wastewater is stored in the ballast tank which is used as the storage tank, and is not discharged into the ocean. In this example, the ship adopts a design of efficient packing scrubbing, and the volume of the scrubbing water generated per hour in the full load voyage is about 1% of the total volume of the ballast tanks, and the volume of the scrubbing water generated in 4.5 hours voyage of prohibited discharging is about 4.5% of the total volume of the ballast tanks. The proportion of the volume of the ballast tank, which is used as the storage tank, in the total volume of all the ship ballast tanks is configured to be two grades. The first grade is 5% - 10%, which can ensure that the scrubbing water is not discharged for the voyage of 4.5 hours. The second grade is 10% - 50%, in which the scrubbing wastewater of 48 hours can be stored if needed. For this purpose, the ballast tank, which is used as the storage tank, is composed of two or more connected ballast tanks located near a center point of a ship plane below the ship waterline. Each of the ballast tank, which is used as the storage tank, is used as the general ballast tank while it does not store the scrubbing wastewater. In this example, the ship scrubbing wastewater stored in the ballast tank, which is used as the storage tank, is treated by chemical neutralization and killing. The chemical neutralization treatment is realized by the chemical neutralizer composed of a tank containing 30% sodium hydroxide solution and a pump for measuring and transporting alkali. A small amount of alkaline chemicals is used for only a short time. The chemical neutralizer is connected with the ballast tank which is used as the storage tank, and is opened when the scrubbing wastewater enters into the ballast tank, so that the acid scrubbing water is neutralized by the alkaline chemicals. It also helpful for the ballast tank to prevent the chemical corrosion. The killing treatment is realized by the original killing device of the ballast water treating system on the ship. During the period of loading and unloading, the main propulsion engine is shut down, and only the auxiliary engine is running or even shut down (using shore power). After the ship leaves the ocean area where the scrubbing water discharging is prohibited, the outlet pump for ballast water is started, so that the scrubbing wastewater, which is stored in the ballast tank that is used as the storage tank and has met the allowed standard required by the scrubbing water discharging regulations and ballast water discharging regulations after the chemical neutralization treatment and killing treatment, is discharged into the ocean from the discharging outlet for scrubbing water which has met the allowed standard. When the ship returns to the general ocean area, the running of EGC system is switched to an operation mode of using seawater for scrubbing and discharging. In this example, the energy consumption of ship exhaust gas cleaning during the whole voyage is about 1.5% of the corresponding engine power, and the scrubbing wastewater meets the ship scrubbing water discharging regulations and ship ballast water discharging regulations and the allowed standard.

### Example 18

These are a group of basic examples of another process for cleaning ship exhaust gas safely of the present invention. As shown in Figure 9, in an example, it comprises steps of:
a) leading the exhaust gas of ship engine and scrubbing water into a scrubber so that the scrubbing water scrubs the exhaust gas of engine to absorb the sulfur dioxide in the exhaust gas;
b) discharging the exhaust gas, in which the sulfur content has met the allowed standard after scrubbing and absorbing, into the atmosphere through a chimney on the top of the scrubber;
c) discharging the acid scrubbing water, which has absorbed the sulfur dioxide after scrubbing, into a container, which is communicated with the atmosphere, through a water seal of the scrubber, wherein the flow capacity of the water seal of the scrubber is configured so that the engine exhaust gas can pass safely and the height of water column of the water seal of the scrubber is configured to be equal to the upper limit of safety air pressure of scrubber; and
d) discharging the acid scrubbing water in the container into a water quality recovery system and then discharging the scrubbing water into the ocean after meeting the allowed standard of water quality.

### Example 19

This is an example based on Example 18. The opening gas pressure of the water seal of the scrubber in step c) is equal to the upper limit value of the safety air pressure of the scrubber.

The mode, which the scrubbing water enters into a container communicated with the atmosphere through the water seal of the scrubber, is adopted in this example. The water seal can be opened automatically when the back pressure of failure scrubber rises to a value above the preset opening value of gas pressure of the water seal. Then the exhaust gas enters into the container, which is communicated with the atmosphere, to form the bypass passage. Because the flow capacity of the water quality is configured so that the engine exhaust gas can pass safely, the engine safe running is ensured. As the first aspect, the water level of water collecting pool of scrubber, i.e., the water seal, is maintained, which prevents the scrubbing water from entering into the engine flue pipe to hinder the smooth exhaust. As the second aspect, the exhaust gas can pass the bypass to ensure the exhaust safety of engine when the scrubber is blocked. As the third aspect, the introduction of traditional bypass damper (double disc, sealed fan) is prevented to avoid the fatal risk of engine stop, which cannot be separated.

### Example 20

This is an example based on Example 18. It comprises a ship body 1, an engine 2, a scrubber 3, a bypass box of water gas balance 3.7, and a seawater neutralizer 5. The engine 2 is installed in the lower part of the ship body 1. An engine exhaust pipe 2.1 of the engine 2 is connected with the gas inlet of the scrubber 3. The scrubber includes a water collecting pool 3.5 and a water seal 3.6. The bypass box of water gas balance 3.7 includes a bypass discharging passage 3.8. The water-gas inlet of the bypass box of water gas balance 3.7 is connected with the water seal 3.6. The water outlet of the bypass box of water gas balance 3.7 is connected with the seawater neutralizer 5.

### Example 21

This an example based on Example 20. The scrubber 3 and the bypass box of water gas balance 3.7 are composed of high temperature resistant materials.

### Example 22

This is an example based on Example 20. The flow capacity of the water seal 3.6 is configured so that the engine exhaust gas can pass safely.

### Example 23

This is an example based on Example 20. The water seal 3.6 is composed of a sealing structure in which the height of water column is configured to be equal to the upper limit of safety air pressure of scrubber.

The protection scope of the claim of the present invention is not limited to the above examples.

## Claims

1. A process for clean sailing of marine ship, comprising steps of:
a) scrubbing exhaust gas of engine with seawater to generate scrubbing seawater;
b) disposing of the scrubbing seawater in an open loop operation mode, including neutralizing the scrubbing seawater in an open loop operation mode; and/or
c) disposing of the scrubbing seawater in a closed loop operation mode, including:
i) storing the scrubbing seawater in a storage container; and
ii) neutralizing the scrubbing seawater in a closed loop operation mode.

2. The process of claim 1, wherein the storage container includes a ballast tank.

3. The process of claim 2, wherein the process further comprises mixing the scrubbing seawater and ballast water in the ballast tank.

4. The process of claim 1, wherein the process further comprises storing the scrubbing seawater in the storage container and using the scrubbing seawater as ballast water.

5. The process of claim 1, wherein step i) is carried out before step ii); or, step i) is carried out after step ii); or, step i) and step ii) are carried out at the same time.

6. The process of claim 1, wherein the process further comprises providing a neutralization equipment for open-closed loop operation, and both of the neutralizing in an open loop operation mode and the neutralizing in a closed loop operation mode are carried out in the neutralization equipment.

7. The process of claim 1, wherein the process further comprises providing a neutralization equipment for open loop operation and a neutralization equipment for close loop operation, and the neutralizing in an open loop operation mode is carried out in the neutralization equipment for open loop operation, and the neutralizing in a closed loop operation mode is carried out in the neutralization equipment for closed loop operation.

8. The process of claim 1, wherein the process further comprises providing a neutralization equipment for open loop operation, and the neutralizing in an open loop operation mode is carried out in the neutralization equipment for open loop operation, and the neutralizing in a closed loop operation mode is carried out in the storage container.

9. The process of claim 1, wherein the neutralizing in an open loop operation mode includes mixing the scrubbing seawater and natural seawater, and/or mixing the scrubbing seawater and an alkaline chemical; and the neutralizing in a closed loop operation mode includes mixing the scrubbing seawater and natural seawater, and/or mixing the scrubbing seawater and an alkaline chemical.

10. The process of claim 9, wherein the alkaline chemical is selected from a group consisting of magnesium based alkaline chemical, calcium based alkaline chemical, sodium based alkaline chemical and the combination thereof.

11. The process of claim 1, wherein the step of disposing of the scrubbing seawater in a closed-loop operation mode further includes: iii) killing organisms in the scrubbing seawater.

12. The process of claim 11, wherein the step of killing organisms in the scrubbing seawater includes UV killing treatment, and/or hypochlorite killing treatment, and/or ozone killing treatment.

13. The process of claim 1, wherein an inner wall of the storage container and an inner wall of pipes and pumps for transporting the scrubbing seawater to the storage container are configured to be acid resistant.

14. A ship for carrying out the process of claim 1, comprising:
a scrubber, in which the seawater is used to scrub the exhaust gas to generate the scrubbing seawater; and
a storage container.

15. The ship of claim 14, wherein the storage container is located near a center point of a ship plane below the ship waterline.

16. The ship of claim 14, wherein the ship further includes a neutralization equipment for open-closed loop operation, and both of the neutralizing in an open loop operation mode and the neutralizing in a closed loop operation mode are carried out in the neutralization equipment for open-closed loop operation.

17. The ship of claim 16, wherein the ship further comprises an equipment for supplying natural seawater, and the equipment for supplying natural seawater is configured to provide natural seawater for the neutralization equipment for open-closed loop operation for the purpose of neutralization treatment.

18. The ship of claim 16, wherein the ship further comprises an equipment for supplying alkaline chemical, and the equipment for supplying alkaline chemical is configured to provide alkaline chemical for the neutralization equipment for open-closed loop operation for the purpose of neutralization treatment.

19. The ship of claim 14, wherein the ship further comprises a neutralization equipment for open loop operation and a neutralization equipment for close loop operation, and the neutralizing in an open loop operation mode is carried out in the neutralization equipment for open loop operation, and the neutralizing in a closed loop operation mode is carried out in the neutralization equipment for closed loop operation.

20. The ship of claim 19, wherein the ship further comprises an equipment for supplying natural seawater, and the equipment for supplying natural seawater is configured to provide natural seawater for the neutralization equipment for open loop operation and/or the neutralization equipment for closed loop operation for the purpose of neutralization treatment.

21. The ship of claim 19, wherein the ship further comprises an equipment for supplying alkaline chemical, and the equipment for supplying alkaline chemical is configured to provide alkaline chemical for the neutralization equipment for open loop operation and/or the neutralization equipment for closed loop operation for the purpose of neutralization treatment.

22. The ship of claim 14, wherein the ship further comprises a neutralization equipment for open loop operation, and the neutralizing in an open loop operation mode is carried out in the neutralization equipment for open loop operation, and the neutralizing in a closed loop operation mode is carried out in the storage container.

23. The ship of claim 22, wherein the ship further comprises an equipment for supplying natural seawater, and the equipment for supplying natural seawater is configured to provide natural seawater for the neutralization equipment for open loop operation and/or the storage container for the purpose of neutralization treatment.

24. The ship of claim 22, wherein the ship further comprises an equipment for supplying alkaline chemical, and the equipment for supplying alkaline chemical is configured to provide alkaline chemical for the neutralization equipment for open loop operation and/or the storage container for the purpose of neutralization treatment.

25. The ship of claim 14, wherein the ship further comprises an equipment for killing organisms, and the equipment for killing organisms includes an UV killing equipment, and/or a hypochlorite killing equipment, and/or an ozone killing equipment.

26. The ship of claim 14, wherein packings are provided in the scrubber to increase the contact area between the seawater and the exhaust gas.
